# EUROPEAN PATENT SPECIFICATION

(11) **EP 0 755 902 B1**
(45) Date of publication and mention of the grant of the patent: **05.11.2003**
(21) Application number: 96305236.0
(22) Date of filing: 17.07.1996
(51) Int. Cl.: C03C 17/00, C03C 17/245

(54) **A method of coating flat glass**
Verfahren zum Beschichten von Flachglas
Procédé de revêtement de verre plat

(30) Priority: 25.07.1995 GB 9515198
(43) Date of publication of application: 29.01.1997
(73) Proprietor: PILKINGTON PLC, St. Helens, Merseyside WA10 3TT (GB)
(72) Inventor: Kirkbride, Bernard James, Penrith, Cumbria CA10 2QQ (GB); Sheel, David William, Ormskirk, Lancashire L39 5EB (GB); Hurst, Simon James, Runcorn, Cheshire WA7 1QW (GB)
(74) Representative: Halliwell, Anthony Charles

(56) References cited:
- EP-A- 0 186 481
- EP-A- 0 365 239
- EP-A- 0 518 755
- FR-A- 2 348 165
- GB-A- 2 026 454
- US-A- 4 590 096
- US-A- 4 880 664
- US-A- 5 124 180
- US-A- 5 393 563

## Description

The present invention relates to a method of coating glass. More particularly, the present invention relates to a method of coating glass with tin oxide utilising stannic chloride as the precursor material.

It has long been known to provide coatings on glass. For example, glass has been coated with silicon to alter the visible radiation, reflection and transmission characteristics of glass.

More recently, there has been an increased demand for glazing in which the glass is provided with coatings to modify its optical properties, particularly energy efficient glazing generally known as low emissivity or low-E glasses. Such glasses are primarily intended for architectural purposes. The required properties of these glasses are that they have a high luminous transmission so that as much visible light as possible can pass therethrough; a similarly high near infra-red radiation transmission so that the heating effect of such radiation passes through the glass; but a high reflectivity of far infra-red radiation so that black body radiation through the glazing from, for example, humans in the building, is reduced. Silver has been used as the coating material for such glasses.

The application of a silver coating to glass may be effected by using a sputtering technique. However, this process suffers from a number of disadvantages. Firstly, silver typically requires the provision of intermediate coatings on either side thereof. The coating produced is relatively soft and is, therefore, easily scratched. However, the most major disadvantage is that the technique generally needs to be carried out under reduced pressure and this, in turn, means that it is difficult, if not impossible, to apply the coating on-line.

These problems led to a search for more suitable coating materials. In this connection, tin oxide (SnO₂) has been found to be an improvement over silver in certain respects. However, this raises further problems even though the disadvantages associated with providing a sputtered silver coating are obviated or at least minimized. The major problem associated with the provision of a tin oxide coating is the provision of a coating having a high optical quality. The coatings are generally applied by a technique known as chemical vapour deposition. In such technique, a suitable tin compound and an oxidising agent are contacted with the glass to be coated at an elevated temperature. Numerous tin compounds have been tried, for example, dimethyl tin dichloride. The oxidising agent used was oxygen itself. The reactants react almost instantaneously at the elevated temperatures used. Moreover, the dimethyl tin dichloride is toxic.

Tin tetrachloride (SnCl₄) and water have also been used. However, these compounds react on contact with one another. It is difficult, therefore, to ensure that the tin oxide is deposited as a coating on the glass rather than elsewhere. In British Patent Specification No. 2026454B, the general factors affecting the coating are set out in some detail. This prior specification discloses a process which appears to overcome the abovementioned problems by contacting the glass surface at an elevated temperature with a gaseous medium containing tin tetrachloride which undergoes chemical reaction and/or decomposition to form the tin oxide coating wherein the gaseous medium contains tin tetrachloride in a concentration corresponding to a partial pressure of at least 2.5 x 10⁻³ atmospheres and water vapour in a concentration corresponding to a partial pressure of at least 10 x 10⁻³ atmospheres. The temperature of the gaseous medium must be at least 300°C and the temperature of the glass at least 550°C. It is stated that the above-specified minimum partial pressures are critical.

Such prior specification states that it is preferred if the tin tetrachloride and the water vapour are supplied to the coating zone in separate gas streams. By so doing, premature reaction of the tin salt with the water vapour, which causes solid deposits to be formed in the interior of a vapour feed passage, is avoided. Such deposits are, in fact, a major problem in attempting to produce a tin oxide coating using tin tetrachloride. Not only do the deposits restrict the passages but, clearly, they are not deposited on the glass. If the tin oxide is not deposited on the glass or on the coating apparatus, it is exhausted from the system. Furthermore, if the tin tetrachloride and water vapour are supplied in separate gas streams which only meet at the surface of the glass, the gas flow along such surface is turbulent. This leads to inefficient coating. Environmental problems therefore arise in dealing with the powder. In addition, the process clearly becomes inefficient with respect to the amount of tin tetrachloride being used.

By omission, such prior patent does contemplate the possibility of introducing the tin tetrachloride and water in a combined stream. However, at the required elevated temperature, any attempt to do this would lead to almost total pre-reaction of the tin tetrachloride and water, leading to the problems described hereinbefore. The preferred aspect of such prior process is, therefore, to provide tin tetrachloride vapour entrained in a stream of nitrogen through a first duct and a gas mixtum including water vapour and air through a second duct. The particular system disclosed leads, it is stated, to a substantially turbulence-free layer.

Such two-duct system, often called a twin-slot system, also gives rise to problems. Firstly, to provide a tin oxide coating, it is necessary for the tin tetrachloride to react with the water and for the coating formed on the glass to be uniform. Clearly, if the reaction is to take place substantially in situ, that is to say, in the region of the glass to be coated, a uniform coating will only be produced if the reaction takes place uniformly over the entire surface of the glass. Using a two-slot system makes this extremely difficult to achieve. Thus, for example, if the flow is non-turbulent, problems arise in the mixing of the reactants which leads to a non-uniformity in the coating.

Clearly, therefore, it would be extremely desirable to provide a method of forming a uniform tin oxide coating on glass using relatively cheap materials such as tin tetrachloride and water in which the reactants are premixed with substantially no pre-reaction taking place between them. This is what the present invention seeks to provide. The present invention also seeks to provide a method in which the pre-mixed reagents are supplied to the glass in a substantially laminar flow.

According to one aspect of the present invention, there is provided a method of producing a tin oxide coating on a moving flat glass substrate by chemical vapour deposition comprising reacting tin tetrachloride with water to form tin oxide which forms a coating on the substrate glass characterised in that the tin tetrachloride and water are provided in separate streams which are then combined, at a temperature lying within the range of 100°C to 240°C, to form a unitary stream, the unitary stream being directed against the substrate in substantially laminar flow, the tin tetrachloride and water only reacting with one another in the region of the substrate to form the coating on the glass.

It has been surprisingly found that, if the pre-mixing is carried out within this temperature range there is little pre-reaction of the two components. Above the upper limit of the temperature range, deposits of Sn(OH)ₓCl_{y} are formed. This is due to the slow hydrolysis of the tin tetrachloride. Below the lower temperature limit, tin tetrachloride pentahydrate (SnCl₄.5H₂O) condenses out

Preferably, the pre-mixing is effected at a temperature lying within the range of 140° to 200°C, most preferably at substantially 180°C. It is within this range that it has been found that the coating formed on the glass is of comparable quality to that achieved using the double-slot method and is produced at a comparable growth rate. However, the problems associated with the double-slot method are obviated or at least minimized.

In a desirable embodiment of the present invention, hydrogen chloride is additionally incorporated in the pre-mixed gas. We have found that this incorporation still further minimises the possibility of the pre-reaction of the tin tetrachloride and the water. Alternatively stated, at any given temperature and mole ratio, it would appear that the use of hydrogen chloride reduces the amount of pre-reaction compared with the basic tin tetrachloride-water mixture.

According to a second aspect of the present invention, therefore, there is provided a method of producing a tin oxide coating on a moving flat glass substrate by chemical vapour deposition comprising the steps of providing gaseous streams of tin tetrachloride, water and hydrogen chloride, the tin tetrachloride and the water reacting to form the tin oxide which forms a coating on the glass characterised in that the streams of tin tetrachloride water and hydrogen chloride are combined to form a single unitary stream which is directed against the substrate whereby the tin tetrachloride and the water only react with one another in the region of the surface of the substrate pre-mixing gaseous streams of tin tetrachloride, water and hydrogen chloride to form a single gaseous stream and causing said single gaseous stream to impact the substrate, wherein the tin tetrachloride and the water react with one another in the region of the surface of the substrate to form a tin oxide coating on the glass. Preferably, the pre-mixing is effected at a temperature below 450°C. Advantageously, the single gaseous stream impacts the substrate in substantially laminar flow.

Part of the explanation for this is that such pre-reaction leads to the production of tin oxide and hydrogen chloride. By adding one of the reaction products, the equilibrium of the reaction is disturbed and tends to act against the production of the tin oxide and more hydrogen chloride. In practice, this means that the predominating forward reaction is slowed. As far as we can tell, the use of nitrogen and/or hydrogen chloride probably has no adverse effect on the rate of growth or quality of the coating. It is desirable if, in such a case, the mole ratio of hydrogen chloride to tin tetrachloride is at least 1:1, advantageously 3:1 to 5:1.

There is a greater propensity for the tin tetrachloride and the water to pre-react with increasing water concentration. It is therefore desirable if the mole ratio of tin tetrachloride to water is greater than or equal to 1:30. In a particularly advantageous embodiment of the present invention, the mole ratio is greater than or equal to 1:10. The most preferred range is from 1:3 to 1:7. There is probably enough water vapour naturally present in the atmosphere to cause the reaction to occur at the temperature of the glass, albeit slowly. On the other hand, the undesired pre-reaction of the tin tetrachloride with the water takes place more readily with increasing proportions of water. The optimum requirements are, therefore, a sufficient proportion of water to achieve a rapid growth of the coating and use of the tin tetrachloride whilst simultaneously avoiding the pre-reaction which leads to the formation and deposition of tin oxide in unwanted areas such as the coater head.

The reaction of tin tetrachloride with water over a wide temperature range, say 25° to 700°C, is not entirely straightforward. At low temperatures, adduct products of the formula SnCl₄.nH₂O are formed. At higher temperatures, the tin tetrachloride is hydrolysed by the water to form partially hydrolysed tin products and ultimately, particularly at high temperatures, tin oxide. As mentioned above, we have found that, in the temperature range of the present invention, neither of these reactions takes place or, if they do, the amount of reaction is minimal.

The mole ratio of tin tetrachloride to water vapour is affected by the temperature at which the pre-mixing is effected. In trials, we have found that if the temperature of the pre-mixing is increased from the optimum temperature, there is an observable increase in the reaction of the pre-mixed components. A similar effect is produced when the temperature is reduced from the optimum temperature but the effect is not as pronounced.

Similarly, we have found that the path length travelled by the pre-mixed gas is of importance. The optimum path length is as short as possible commensurate with the formation of a laminar flow of the pre-mixed gas along the glass surface. Nevertheless, the premixing of the present invention allows the path length to be tens of centimetres without adverse effects. However, the tolerance of the mixed gas stream to a longer residence time, that is to say, to a longer path length, reduces with the deviation from the optimum temperature and from the optimum mole ratio.

Preferably, the gases are each supplied to the pre-mixing stage mixed with a diluant. Advantageously, the diluant is a substantially inert gas such as nitrogen. It has been found that, by so doing, pre-reaction of the tin tetrachloride and the water is still further minimised.

When attempting to apply a tin oxide coating to glass, it has been customary to add dopants to the tin tetrachloride-water system so as to enhance the conductivity of-the coating. In this connection, fluorine containing dopants such as hydrogen fluoride and trifluoroacetic acid are well known and such compounds may also be used in the process of the present invention. Furthermore, we have found that lower alcohols such as methanol, ethanol and mixtures thereof may be included in the system.

If desired, additional water vapour maybe supplied in a second gaseous stream which is caused to impact the glass substrate downstream of the region of impact of the premixed gaseous stream. The additional water vapour may contain at least one dopant. A preferred dopant, in such a case, is hydrogen fluoride.

The invention will be further described, by way of example only, with reference to the accompanying drawings, in which:-
Fig. 1 is a cross-sectional view of a coater head suitable for use for applying a tin oxide coating to a moving sheet of glass utilising the method of the present invention; and
Fig. 2 is a plan view, with portions removed for the sake of clarity, of the coater head shown in Fig. 1.

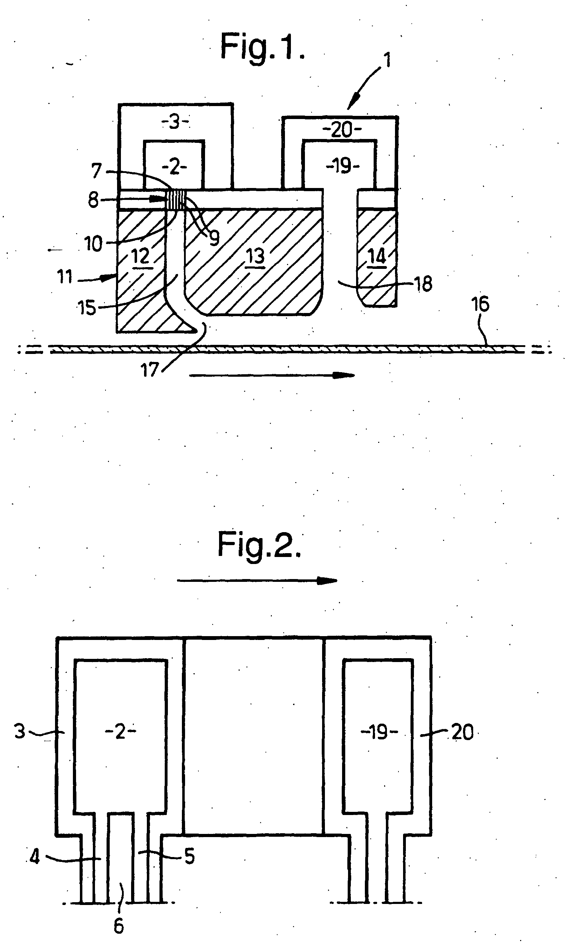

Referring now to the drawings, there is shown a coater head generally designated 1. The head includes a primary chamber 2 which acts as a mixing chamber for tin tetrachloride and water. The chamber 2, which extends over the full width of the glass to be coated, is surrounded by an oil-cooled jacket 3. The tin tetrachloride and the water vapour are supplied to the chamber 3 through separate conduits 4,5 respectively formed in a block 6 as shown in Fig. 2.

The mixed gases leave the chamber 2 though an outlet 7 formed in the base thereof and pass through a so-called waffle pack 8. The waffle pack 8 consists of a plurality of corrugated plates 9 located adjacent one another and extending generally vertically. The waffle pack 8 defines a plurality of vertical channels down which the mixture of gases pass. It increases the pressure of the gas mixture above the waffle pack which gives uniform distribution of the mixture across the width of an inlet 10 to a secondary chamber 11. The secondary chamber 11 is formed from carbon shapes forming an upstream toe 12, a central portion 13 and a downstream toe 14. The toe 12 and the central portion 13 define a slot 15 through which the gas mixture entering the inlet 10 is constrained to pass. The base of the toe 12 is disposed at a small spacing, of the order of one millimetre above a sheet of moving glass 16.

At this point, it is worth noting that, in a known two-slot coater, the gas components are maintained separate from one another until they are of the order of millimetres above the glass. Basically, what occurs in a two-slot coater is that one of the components of the mixture is supplied through a slot similar to 15 whilst the other component is supplied through a second slot similar to 15 but downstream thereof. Essentially, therefore, the first component has been delivered by the slot into the region of the glass before it is joined by the other component. This, almost inevitably, leads to turbulent flow where the two gas streams meet.

In the present invention, however, the two gas streams are mixed in the primary chamber 2 which is located above the upper surface of the glass at a spacing measured in tens of centimetres rather than single figure millimetres. Accordingly, the mixed gas stream can be directed onto the glass in a substantially laminar flow.

It will be appreciated that when the mixture of gases issue from the outlet 17 of the slot 15, the ambient temperature is approaching that of the moving sheet of glass 16. The increase in temperature causes the tin tetrachloride to react with the water and the resultant tin oxide forms a coating on the glass 16.

Inevitably, not all of the pre-mixed material will form a coating on the glass. As mentioned hereinbefore, there will be unreacted reactants and intermediate species produced. Accordingly, between the central portion 13 and the downstream toe 14, an outlet slot 18 is defined. The gaseous products pass up the slot 18 into an exhaust chamber 19. This latter is surrounded by a water-cooled jacket 20. After being cooled in the chamber 19, the gases are passed to an exhaust system (not shown). Again, the chamber 19 extends over the full width of the glass being coated.

The invention will now be illustrated further with reference to the following non-limitative Examples.

### Example A

In this Example, a coater was used which was installed in a float bath so that a small width of the float glass could be coated without affecting the remainder of the glass sheet. The ribbon speed of the glass was approximately 370 m/hr and the thickness was 1.2 mm. The glass temperature was approximately 630°C. The temperature of the primary chamber was maintained at 150°C. The tin tetrachloride and water vapour were delivered by bubbling nitrogen through the liquids maintained at 80°C in bubblers and hence through the separate heated conduits 4,5 respectively to the primary chamber 2.

The flow rates used were 6g/min tin tetrachloride and 1.5g/min water, giving a 1:3.5 SnCl₄:H₂O molar ratio. The trial was carried out for a period of two and a half hours with only minor adjustments to the extraction proving necessary. A coating having a thickness of 500Å was achieved. On dismantling the coater head, it was discovered that the oil cooled surfaces and the associated conduits were completely free from deposits, thus showing that tin tetrachloride and water used for producing a tin oxide coating on glass can be pre-mixed with one another without pre-reacting.

### Examples B to D

In these three Examples, variations of Example A were effected with the exception that the coating width was increased. In all three Examples, a water:tin tetrachloride mole ratio of approximately 5:1 was utilised. Metered amounts of stannic chloride and water from a pressure pot system were separately evaporated and the temperature of the ensuing gases was raised to the desired temperature. With the exception of Example 2, this latter stage was effected in a stream of hot, dry, nitrogen. The experimental conditions and a summary of the results obtained are tabulated in Table I hereafter. However, in brief, the experimental conditions were as follows:-
- Example B:: Reactants pre-mixed at a system temperature of 150°C;
- Example C:: Reactants in diluent dry nitrogen premixed at a system temperature of 180°C; and
- Example D:: As Example C but with the addition of anhydrous hydrogen chloride.

Example B proved somewhat unsuccessful. The distribution system was blocked within a very short time by a low melting (80°C to 90°C) deliquescent solid which appeared to be a mixture of hydrates of stannic chloride and possibly oxychlorides.

The small amount of coating deposited varied in thickness from 1000Å to 6000Å and had a sheet resistance of 40 ohms/square at its thickest part.

Example C was more successful. The coating operation was terminated after three hours when, from the appearance of the coating, it was apparent that the system was becoming blocked. Subsequent investigation revealed that powdery deposits had been formed both on top of and within the waffle pack. On analysis, these deposits were found to be, primarily, amorphous tin oxide having a measurable chlorine content. The coating formed progressively reduced in both thickness and width as the trial progressed. The average coating thickness achieved lay in the range of 2000Å to 2500Å and this represented an efficiency, in terms of tin tetrachloride utilisation, of the order of 40% to 50%. On analysis, the coating of tin oxide was found to be substoichiometric and contained some tin oxychloride (SnOCl). The sheet resistance ranged from 350 to 500 ohms/square.

Example D was very similar to Example C with the exception of the addition of anhydrous hydrogen chloride to the system. The trial was halted after a period of five hours. Subsequent examination of the coating apparatus revealed that virtually no pre-reaction had taken place. No deposits were found on the delivery side of the apparatus and only a surface film of oxide dust on the surface of the secondary chamber. During such trial, the hydrogen chloride/stannic chloride mole ratio was decreased from 3:1 to 1:1 and it was found that the latter still inhibited pre-reaction whilst, simultaneously, improving the opacity of the glass. The coating produced remained constant over the period of the trial and the thickness thereof generally averaged 4000Å to 5200Å. This gives a coating efficiency of between 30% and 40%. Again, the coating produced was sub-stoichiometric and there was evidence of chloride impurities. The sheet resistance remained consistently greater than 1200 ohms/square.

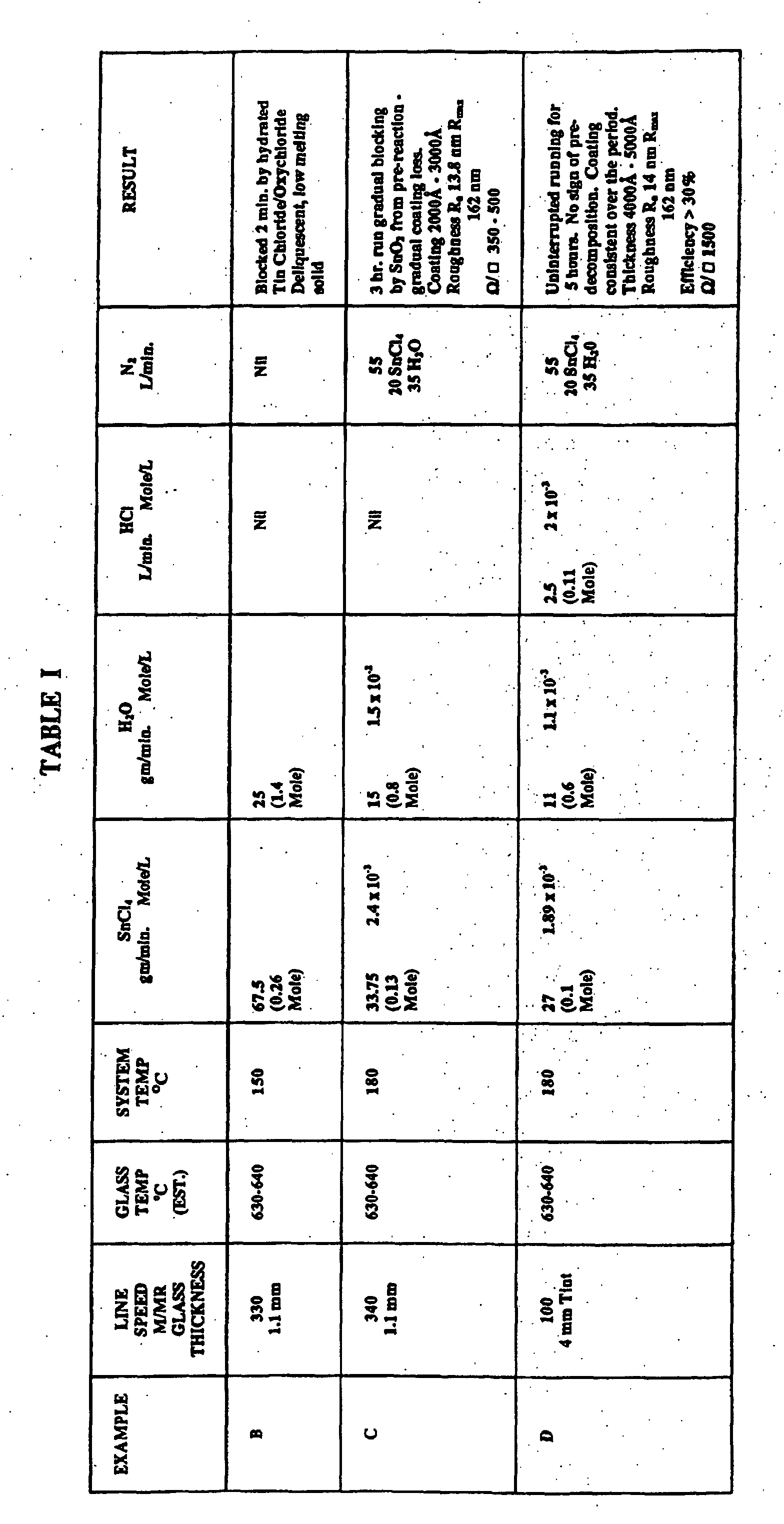

From the above, a person skilled in the art will appreciate that we have achieved the long-desired aim of successfully pre-mixing tin tetrachloride and water with minimal pre-reaction. It is clear from the Examples given above, particularly Examples A, C and D, that the pre-mixing may simply be of the tin tetrachloride and the water but that such pre-mixing and subsequent coating is improved by the use of nitrogen as a diluent and/or hydrogen chloride as a reaction inhibitor.

A person skilled in the art will also appreciate that the above Examples show good results in the particular conditions involved. Thus, for example, the Examples show the deposition of the coating directly onto the glass. It will readily be appreciated that, in practice, this will not be the case because the glass will usually have been provided with an It will also be appreciated that the Examples have been carried out under less than ideal conditions.

The following Examples, which also illustrate the present invention and which are non-limitative show various different reactants and proportions thereof.

### SnCl₄/H₂O only

Preformed on a static substrate, with a substrate temperature of 585°C, and a delivery line temperature of 180°C.

| Example | SnCl₄:H₂O Molar Ratio | Maximum Deposition Rate (Å/second) |
|---|---|---|
| 1 | 6:1 | 150 |
| 2 | 8.3:1 | 350 |
| 3 | 12:1 | 500 |

### SnCl₄/H₂O/HCl (in solution)

Preformed on a static substrate, with a substrate temperature of 585°C, and a delivery line temperature of 225°C.

| Example | SnCl₄:H₂O Molar Ratio | SnCl₄:HCl Molar Ratio | Maximum Deposition Rate (Å/second) |
|---|---|---|---|
| 4 | 1:29 | 1.1:1 | 400 |
| 5 | 1:28 | 1:1.9 | 423 |

### SnCl₄/H₂O/HCl (anhydrous)/TFAA (Trifluoroacetic Acid)

Preformed on-line using the edge coater with dual flow head, with a glass temperature of ∼ 630°C (in the float bath), a line speed of 266 m/hr and delivery line temperature of 180-190°C. A silica coating was deposited onto the glass prior to deposition of the tin oxide coating to act as a sodium blocking layer.

| Example | SnCl₄:H₂O Molar Ratio | SnCl₄:HCl Molar Ratio | SnCl₄:TFAA Molar Ratio | Film Thickness (Å) |
|---|---|---|---|---|
| 6 | 1:3.6 | 1:17 | 1:2 | 1570 |
| 7 | 1:6 | 1:17 | 1:3.4 | 1598 |
| 8 | 1:12 | 1:17 | 1:6.8 | 2937 |
| 9 | 1:25 | 1:50 | 1:14.3 | 1922 |
| 10 | 1:45 | 1:25 | 1:25.5 | 3447 |
| 11 | 1:60 | 1:50 | 1:34.7 | 1650 |
| 12 | 1:3.6 | 1:8.5 | 1:2 | 1637 |
| 13 | 1:6 | 1:8.5 | 1:3.4 | 2200 |
| 14 | 1:12 | 1:8.5 | 1:6.8 | 2400 |
| 15 | 1:45 | 1:12.7 | 1:25.5 | 2700 |
| 16 | 1:3.6 | 1:4.22 | 1:2 | 1612 |
| 17 | 1:6 | 1:4.22 | 1:3.4 | 2100 |
| 18 | 1:12 | 1:4.22 | 1:6.8 | 2293 |
| 19 | 1:45 | 1:6.3 | 1:25.5 | 2700 |
| 20 | 1:6 | 1:1 | 1:3.4 | 1535 |

### SnCl₄H₂O/TFAA

Conditions as for Examples 6 to 20

| Example | SnCl₄:H₂O Molar Ratio | SnCl₄HCl Molar Ratio | Film Thickness (Å) |
|---|---|---|---|
| 21 | 1:3.6 | 1:2 | 1485 |
| 22 | 1:7 | 1:4 | 113 |

Further Examples were carried out at 180°C and at 260°C. These are detailed as follows:-

| Example Temperature: 180°C | SnCl₄/HCl (Moles) | SnCl₄/H₂O (Moles) | Maximum Deposition Rate (Åsec⁻¹) | Normalised Integrated Film Thickness With Respect to Deposition Time (pm²sec⁻¹) |
|---|---|---|---|---|
| | 0% HCl in solution | | | |
| 23 | - | 1/30 | 473 | 8155 |
| 24 | - | 1/30 | 521 | 8541 |
| | 5% HCl in solution | | | |
| 25 | 1/0.35 | 1/10 | 1039 | 15454 |
| 26 | 1/0.9 | 1/27.8 | 638 | 10121 |
| 27 | 1/1.9 | 1.55.6 | 593 | 7972 |
| 28 | 1/5.8 | 1/168.6 | 363 | 6137 |
| | 10% HCl in solution | | | |
| 29 | 1/1.9 | 1/26.1 | 678 | 11506 |
| 30 | 1/3.8 | 1/52.3 | 600 | 10198 |
| 31 | 1/6.3 | 1.87.1 | 614 | 10430 |
| 32 | 1/11.5 | 1/158.7 | 481 | 7522 |
| | 20% HCl in solution | | | |
| 33 | 1/1.4 | 1/8.3 | 566 | 9840 |
| 34 | 1/3.8 | 1/22.9 | 512 | 9011 |
| 35 | 1/7.6 | 1/45.8 | 503 | 9004 |
| 36 | 1/12.7 | 1/76.3 | 465 | 7901 |
| 37 | 1/23.1 | 1/138.9 | 280 | 4581 |

| Example Temperature: 260°C | SnCl₄/HCl (Moles) | SnCl₄/H₂O (Moles) | Maximum Deposition Rate (Åsec⁻¹) | Normalised Integrated Film Thickness With Respect to Deposition Time (pm²sec⁻¹) |
|---|---|---|---|---|
| | 0% HCl in solution | | | |
| 38 | - | 1/30 | 256 | 4383 |
| 39 | - | 1/30 | 282 | 4008 |
| | 5% in solution | | | |
| 40 | 1/0.2 | 1/6.5 | 250 | 3617 |
| 41 | 1/0.35 | 1/10 | 272 | 4756 |
| 42 | 1/0.9 | 1/27.8 | 331 | 5699 |
| 43 | 1/1.9 | 1.55.6 | 497 | 7574 |
| 44 | 1/5.8 | 1/168.6 | 246 | 3571 |
| | 10% HCl in solution | | | |
| 45 | 1/1.9 | 1/26.1 | 442 | 7632 |
| 46 | 1/3.8 | 1/52.3 | 500 | 8424 |
| 47 | 1/6.3 | 1/87.1 | 540 | 9061 |
| 48 | 1/11.5 | 1/158.7 | 328 | 5018 |
| | 20%HCl in solution | | | |
| 49 | 1/1.4 | 1/8.3 | 305 | 5130 |
| 50 | 1/3.8 | 1/22.9 | 283 | 4145 |
| 51 | 1/7.6 | 1/45.8 | 420 | 7454 |
| 52 | 1/12.7 | 1/76.3 | 481 | 8089 |
| 53 | 1/23.1 | 1/138.9 | 254 | 4127 |

## Claims

1. A method of producing a tin oxide coating on a moving flat glass substrate by chemical vapour deposition comprising reacting tin tetrachloride with water to form tin oxide which forms a coating on the substrate glass **characterised in that** the tin tetrachloride and water are provided in separate streams which are then combined, at a temperature lying within the range of 100°C to 240°C, to form a unitary stream, the unitary stream being directed against the substrate in substantially laminar flow, the tin tetrachloride and water only reacting with one another in the region of the substrate to form the coating on the glass.

2. A method as claimed in Claim 1 **characterised in that** the combining of the tin tetrachloride and water streams is effected at a temperature lying within the range of 140°C to 200°C, optimally at 180°C.

3. A method of producing a tin oxide coating on a moving flat glass substrate by chemical vapour deposition comprising the steps of providing gaseous streams of tin tetrachloride, water and hydrogen chloride, the tin tetrachloride and the water reacting to form the tin oxide which forms a coating on the glass **characterised in that** the streams of tin tetrachloride, water and hydrogen chloride are combined to form a single unitary stream which is directed against the substrate whereby the tin tetrachloride and the water only react with one another in the region of the surface of the substrate.

4. A method as claimed in claim 3 **characterised in that** the combining of the streams is effected at a temperature of not more than 450°C.

5. A method as claimed in any preceding Claim **characterised in that** the mole ratio of the tin tetrachloride to the water is at least 1:30.

6. A method as claimed in Claim 5 **characterised in that** the mole ratio is up to 1:10, optimally lying within the range of 1:3 to 1:7.

7. A method as claimed in any preceding Claim **characterised in that** the path length traversed by the unitary gas stream before impacting the substrate is at least 10cm.

8. A method as claimed in any preceding Claim **characterised in that** the streams of tin tetrachloride and water each contain a diluant.

9. A method as claimed in Claim 8 **characterised in that** the diluant is an inert gas such as nitrogen.

10. A method as claimed in any preceding Claim **characterised in that** the mole ratio of the hydrogen chloride to the tin tetrachloride lies within the range of 1:5 to 11.5:1, optimally within the range of 3:1 to 5:1.

11. A method as claimed in any preceding Claim **characterised in that** the combination of the water-containing stream and the tin tetrachloride-containing stream is effected in the presence of a lower alkanol.

12. A method as claimed in Claim 11 **characterised in that** the lower alkanol is methanol, ethanol or a mixture thereof.

13. A method as claimed in any preceding Claim **characterised in that** the combination of the water-containing steam and the tin tetrachloride-containiong stream is effected in the presence of a dopant.

14. A method as claimed in Claim 13 **characterised in that** the dopant is selected from hydrogen fluoride and trifluoroacetic acid.

15. A method as claimed in Claim 14 **characterised in that** dopant is included in a further water-containing stream which impacts the substrate downstream of the region of impact of the unitary gas stream with the substrate.

16. A method as claimed in any one of Claims 3 to 15 **characterised in that** the unitary gas stream impacts the substrate in substantially laminar flow.

## Patentansprüche

1. Verfahren zur Herstellung einer Zinnoxidbeschichtung auf einem sich bewegenden flachen Glassubstrat durch Gasphasenabscheidung, welches die Umsetzung von Zinntetrachlorid mit Wasser umfasst, um Zinnoxid zu bilden, das auf dem Substratglas eine Beschichtung erzeugt, **dadurch gekennzeichnet, dass** Zinntetrachlorid und Wasser in getrennten Strömen bereitgestellt und anschließend miteinander bei einer Temperatur innerhalb eines Bereichs von 100 bis 240 °C vereinigt werden, um einen einheitlichen Strom zu bilden, der in einer im wesentlichen laminaren Strömung auf das Substrat gerichtet wird, wobei Zinntetrachlorid und Wasser nur im Bereich des Substrates miteinander reagieren, um die Beschichtung auf dem Glas zu erzeugen.

2. Verfahren nach Anspruch 1, **dadurch gekennzeichnet, dass** die Vereinigung des Zinntetrachloridstroms mit dem Wasserdampfstrom bei einer Temperatur innerhalb des Bereichs von 140 bis 200 °C und optimalerweise bei 180 °C durchgeführt wird.

3. Verfahren zur Herstellung einer Zinnoxidbeschichtung auf einem sich bewegenden flachen Glassubstrat durch Gasphasenabscheidung, welches die Stufen Bereitstellen von Gasströmen aus Zinntetrachlorid, Wasser und Chlorwasserstoff und Umsetzen des Zinntetrachlorids mit dem Wasser umfasst, wobei sich Zinnoxid bildet, das auf dem Glas eine Beschichtung erzeugt, **dadurch gekennzeichnet, dass** die Ströme aus Zinntetrachlorid, Wasser und Chlorwasserstoff miteinander vereinigt werden, um einen einzigen einheitlichen Strom zu bilden, der auf das Substrat gerichtet wird, wodurch Zinntetrachlorid und Wasser erst im Oberflächenbereich des Substrats miteinander reagieren.

4. Verfahren nach Anspruch 3, **dadurch gekennzeichnet, dass** die Vereinigung der Ströme bei einer Temperatur von höchstens 450 °C durchgeführt wird.

5. Verfahren nach einem der vorhergehenden Ansprüche, **dadurch gekennzeichnet, dass** das Molverhältnis von Zinntetrachlorid zu Wasser mindestens 1 : 30 beträgt.

6. Verfahren nach Anspruch 5, **dadurch gekennzeichnet, dass** das Molverhältnis bis zu 1: 10 beträgt und optimalerweise im Bereich von 1 : 3 bis 1 : 7 liegt.

7. Verfahren nach einem der vorhergehenden Ansprüche, **dadurch gekennzeichnet, dass** die Weglänge, die von dem einheitlichen Gasstrom zurückgelegt wird, bevor er auf das Substrat trifft, mindestens 10 cm beträgt.

8. Verfahren nach einem der vorhergehenden Ansprüche, **dadurch gekennzeichnet, dass** die Ströme aus Zinntetrachlorid und Wasser jeweils ein Verdünnungsmittel enthalten.

9. Verfahren nach Anspruch 8, **dadurch gekennzeichnet, dass** das Verdünnungsmittel inertes Gas wie Stickstoff ist.

10. Verfahren nach einem der vorhergehenden Ansprüche, **dadurch gekennzeichnet, dass** das Molverhältnis von Chlorwasserstoff zu Zinntetrachlorid im Bereich von 1 : 5 bis 11,5 : 1 und optimalerweise im Bereich von 3 : 1 bis 5 : 1 liegt.

11. Verfahren nach einem der vorhergehenden Ansprüche, **dadurch gekennzeichnet, dass** die Vereinigung des das Wasser enthaltenden Stroms mit dem das Zinntetrachlorid enthaltenden Strom in Gegenwart eines niederen Alkanols durchgeführt wird.

12. Verfahren nach Anspruch 11, **dadurch gekennzeichnet, dass** das niedere Alkanol Methanol, Ethanol oder ein Gemisch davon ist.

13. Verfahren nach einem der vorhergehenden Ansprüche, **dadurch gekennzeichnet, dass** die Vereinigung des das Wasser enthaltenden Stroms mit dem das Zinntetrachlorid enthaltenden Strom in Gegenwart eines Dotiermittels durchgeführt wird.

14. Verfahren nach Anspruch 13, **dadurch gekennzeichnet, dass** das Dotiermittel unter Fluorwasserstoff und Trifluoressigsäure ausgewählt wird.

15. Verfahren nach Anspruch 14, **dadurch gekennzeichnet, dass** das Dotiermittel in einem weiteren Wasser enthaltenden Strom enthalten ist, der auf das Substrat nach dem Bereich des Auftreffens des einheitlichen Gasstroms auf das Substrat auftrifft.

16. Verfahren nach einem der Ansprüche 3 bis 15, **dadurch gekennzeichnet, dass** der einheitliche Gasstrom als im wesentlichen laminarer Strom auf das Substrat auftrifft.

## Revendications

1. Procédé pour la production d'un revêtement d'oxyde d'étain sur un substrat en verre plat mobile par dépôt chimique en phase vapeur, comprenant la réaction de tétrachlorure d'étain avec de l'eau pour former de l'oxyde d'étain qui forme un revêtement sur le verre servant de substrat, **caractérisé en ce que** le tétrachlorure d'étain et l'eau sont fournis dans des courants distincts qui sont ensuite combinés, à une température comprise dans l'intervalle de 100°C à 240°C, pour former un courant unitaire, le courant unitaire étant dirigé contre le substrat suivant un flux pratiquement laminaire, le tétrachlorure d'étain et l'eau réagissant seulement l'un avec l'autre dans la région du substrat pour former le revêtement sur le verre.

2. Procédé suivant la revendication 1, **caractérisé en ce que** l'association des courants de tétrachlorure d'étain et d'eau est effectuée à une température comprise dans l'intervalle de 140°C à 200°C, de manière optimale égale à 180°C.

3. Procédé pour la production d'un revêtement d'oxyde d'étain sur un substrat en verre plat mobile par dépôt chimique en phase vapeur, comprenant les étapes consistant à prendre des courants gazeux de tétrachlorure d'étain, d'eau et de chlorure d'hydrogène, le tétrachlorure d'étain et l'eau réagissant pour former l'oxyde d'étain qui forme un revêtement sur le verre, **caractérisé en ce que** les courants de tétrachlorure d'étain, d'eau et de chlorure d'hydrogène sont combinés pour former un courant unitaire unique qui est dirigé contre le substrat, le tétrachlorure d'étain et l'eau réagissant ainsi seulement l'un avec l'autre dans la région de la surface du substrat.

4. Procédé suivant la revendication 3, **caractérisé en ce que** la combinaison des courants est effectuée à une température non supérieure à 450°C.

5. Procédé suivant l'une quelconque des revendications précédentes, **caractérisé en ce que** le rapport molaire du tétrachlorure d'étain à l'eau est égal à au moins 1:30.

6. Procédé suivant la revendication 5, **caractérisé en ce que** le rapport molaire va jusqu'à 1:10 étant compris de manière optimale dans l'intervalle de 1:30 à 1:7.

7. Procédé suivant l'une quelconque des revendications précédentes, **caractérisé en ce que** la longueur du trajet de parcours du courant gazeux unitaire avant de frapper le substrat, est d'au moins 10 cm.

8. Procédé suivant l'une quelconque des revendications précédentes, **caractérisé en ce que** les courants de tétrachlorure d'étain et d'eau contiennent chacun un diluant.

9. Procédé suivant la revendication 8, **caractérisé en ce que** le diluant est un gaz inerte tel que l'azote.

10. Procédé suivant l'une quelconque des revendications précédentes, **caractérisé en ce que** le rapport molaire du chlorure d'hydrogène au tétrachlorure d'étain est compris dans l'intervalle de 1:5 à 11,5:1, de manière optimale dans l'intervalle de 3:1 à 5:1.

11. Procédé suivant l'une quelconque des revendications précédentes, **caractérisé en ce que** la combinaison du courant contenant de l'eau et du courant contenant du tétrachlorure d'étain est effectuée en présence d'un alcanol inférieur.

12. Procédé suivant la revendication 11, **caractérisé en ce que** l'alcanol inférieur est le méthanol, l'éthanol ou un de leurs mélanges.

13. Procédé suivant l'une quelconque des revendications précédentes, **caractérisé en ce que** la combinaison du courant contenant de l'eau et du courant contenant du tétrachlorure d'étain est effectuée en présence d'un dopant.

14. Procédé suivant la revendication 13, **caractérisé en ce que** le dopant est choisi entre le florure d'hydrogène et l'acide trifluoracétique.

15. Procédé suivant la revendication 14, **caractérisé en ce que** le dopant est incorporé à un courant supplémentaire contenant de l'eau qui frappe le substrat en aval de la région d'impact du courant gazeux unitaire avec le substrat.

16. Procédé suivant l'une quelconque des revendications 3 à 15, **caractérisé en ce que** le courant gazeux unitaire frappe le substrat suivant un flux essentiellement laminaire.
